# EUROPÄISCHE PATENTSCHRIFT

(11) **EP 3 453 936 B1**
(45) Veröffentlichungstag und Bekanntmachung des Hinweises auf die Patenterteilung: **19.05.2021**
(21) Anmeldenummer: 17190373.5
(22) Anmeldetag: 11.09.2017
(51) Int. Cl.: F16L 57/00, B65D 59/02, F16L 13/14, F16L 55/11

(54) **VERSCHLUSSSTOPFEN ZUM TEMPORÄREN VERSCHLIESSEN EINES ROHRES**
PLUG FOR TEMPORARY CLOSURE OF A PIPE
BOUCHON DE FERMETURE TEMPORAIRE D'UN TUYAU

(43) Veröffentlichungstag der Anmeldung: 13.03.2019
(73) Patentinhaber: Esta-Rohr-Gesellschaft mit beschränkter Haftung, 57074 Siegen (DE)
(72) Erfinder: Soost, Siegfried, 15745 Wildau (DE); Pitzer, Sven, 57250 Netphen (DE)
(74) Vertreter: Brandt & Nern Patentanwälte

(56) Entgegenhaltungen:
- DE-A1-102009 051 025
- US-A1- 2012 192 980
- US-B1- 9 340 338

## Beschreibung

Die Erfindung betrifft einen Verschlussstopfen zum temporären Verschließen von Rohren, die in Leitungssystemen zur Führung flüssiger oder gasförmiger Medien, wie insbesondere in Leitungssystemen zur Trinkwasserversorgung, zur Gasoder Druckluftversorgung oder zur Medienversorgung von Solar- oder Heizungsanlagen, verwendet werden. Sie bezieht sich auf eine spezielle körperliche Ausbildung eines solchen Verschlussstopfens zum Verschließen der Rohröffnung eines Rohrendes. Bei der Darstellung der Erfindung wird nachfolgend von Leitungssystemen zur Wasserversorgung und somit von dem bevorzugten Anwendungsfall einer Verwendung entsprechender Verschlussstopfen für Rohre zur Wasserversorgung ausgegangen, ohne dass die Erfindung, insbesondere im Hinblick auf die Ausbildung des Verschlussstopfens, hierauf beschränkt wäre. Vielmehr kommt hinsichtlich des nur zum temporären und insoweit nicht dem druckdichten Verschließen der Rohre dienenden Verschlussstopfens eine Anwendung der Erfindung auch für Gasleitungen in Betracht.

In Leitungssystemen der eingangs genannten Art werden die Rohre untereinander und mit anderen Elementen des Leitungssystems über Rohrverbinder, wie beispielsweise Fittings mit einem integrierten Dichtelement, verbunden. Zur Verbindung werden die Rohre in einen Einsteckbereich derartiger Rohrverbinder eingeschoben. Seitens der Hersteller von Rohren ist es üblich, die Rohre beidseitig mit jeweils einem zumeist aus Kunststoff oder einem vergleichbaren Material bestehenden Verschlussstopfen zu verschließen, um zu verhindern, dass während des Transports zur Baustelle oder bei ihrer Lagerung Verschmutzungen, Fremdstoffe oder gar Fremdkörper in die Rohre eindringen. Erst im Zuge der Montage der Rohre vor Ort, so insbesondere bei deren Einschieben in einen Rohrverbinder, werden üblicherweise die Verschlussstopfen entfernt. Nachfolgend soll für den vorstehend genannten Rohrverbinder auch vereinfachend der Begriff Verbinder oder der insbesondere in der Sanitärtechnik gebräuchliche Begriff Fitting verwendet werden, ohne dass hiermit eine Beschränkung der Erfindung auf Verschlussstopfen für Rohre der Wasser- beziehungsweise Sanitärtechnik verbunden wäre. Vielmehr stehen diese drei Begriffe im Grunde synonym für einander beziehungsweise der Fitting für einen Spezialfall des Rohrverbinders. Letztlich ist es aber für die Erfindung irrelevant, welcher dieser Begriffe verwendet wird, da jedenfalls die konkrete Beschaffenheit des nachfolgend beschriebenen erfindungsgemäßen Verschlussstopfens hiervon unabhängig ist.

Nach ihrer Fertigstellung durch Verlegen entsprechender, mittels Rohrverbindern miteinander verbundener Rohre, werden neu montierte Leitungssysteme auf ihre Dichtheit überprüft, wobei von der Dichtheit und der insoweit früher erfolgten Überprüfung bereits vorhandener, mit dem neu montierten Leitungssystem zu koppelnder Leitungssysteme ausgegangen wird. Dabei geht es selbstverständlich insbesondere darum, die Dichtheit im Bereich der Verbinder, nämlich an den Stellen, in denen die Rohre beispielsweise in einen Fitting mit einem integrierten Dichtelement eingeschoben wurden, zu überprüfen. Dies geschieht dadurch, dass in ein zu überprüfendes, neu montiertes Leitungssystem ein Fluid, üblicherweise Luft, eingebracht und mit einem über dem später in dem Leitungssystem herrschenden Betriebsdruck liegenden Prüfdruck beaufschlagt wird. Über den Zeitraum der Dichtheitsprüfung hinweg wird dann kontrolliert, ob der in das System eingebrachte Druck stabil bleibt. Im Falle eines Druckabfalls wird die hierfür ursächliche Leckage lokalisiert und beseitigt.

In der Vergangenheit ist wiederholt beobachtet worden, dass beim Verlegen beziehungsweise bei der Montage eines Leitungssystems Verschlussstopfen aus den Rohren vor dem Einschieben der Rohre in einen Rohrverbinder versehentlich nicht entfernt wurden. Dies kann dazu führen, dass das Leitungssystem sich bei der anschließenden Druckprüfung zwar als dicht erweist, aber dann bei der Inbetriebnahme des Leitungssystems für das zu transportierende Fluid, beispielsweise Wasser oder aber Gas, Luft oder Sole, nicht strömungsdurchlässig ist, so dass das Leitungssystem seinen bestimmungsgemäßen Zweck nicht erfüllen kann. Die Folge hiervon sind zeit- und kostenintensive Nacharbeiten, bei denen versehentlich zunächst nicht entfernte Verschlussstopfen gefunden und nachträglich entfernt werden müssen.

Ein weiteres Problem besteht darin, dass sich die Verschlussstopfen herkömmlicher Prägung zuweilen nur verhältnismäßig schwer aus den endseitigen Öffnungen der Rohre entfernen lassen. Dies hängt damit zusammen, dass die Verschlussstopfen im Allgemeinen einen zylindrischen, in das zu verschließende Rohr einzuschiebenden Abschnitt aufweisen, dessen Außendurchmesser nahezu dem Innendurchmesser des Rohres entspricht, so dass zur Verhinderung eines vorzeitigen ungewollten Lösens des Verschlussstopfens eine relativ feste Verbindung zwischen Rohr und Verschlussstopfen entsteht. Für einen zusätzlichen Halt ist der Verschlussstopfen auf der Mantelfläche des vorgenannten zylindrischen Abschnitts häufig mit einer den Halt verbessernden Profilierung versehen. An einem seiner Enden weist der zylindrische Abschnitt des Verschlussstopfens üblicherweise eine nicht in das Rohr einschiebbare Anschlagfläche auf. Diese im Allgemeinen scheibenförmige Anschlagfläche hat üblicherweise einen dem Außendurchmesser des Rohres entsprechenden Durchmesser. Jedoch wird hierdurch einer den Verschlussstopfen entfernenden Person das Angreifen an den Verschlussstopfen, um dessen in das Rohr hineingeschobenen Abschnitt - im Weiteren auch Halteabschnitt - aus dem Rohr herauszuziehen, oft etwas erschwert.

Aus der DE 3 939 092 A1 ist ein Verschlusselement für Gewindebohrungen bekannt geworden, dessen Aufbau mit dem zuvor beschriebenen grundsätzlich vergleichbar ist, so dass dieses bei entsprechender Dimensionierung in dieser Form auch als Verschlussstopfen für Rohre von Leitungssystemen dienen könnte. Bei dem in der Druckschrift beschriebenen Verschlusselement überragt die stirnseitig äußere Anschlagscheibe den Außendurchmesser des mit ihm zu verschließenden Elementes, wie beispielsweise eines Rohrendes, zumindest in einem hierdurch eine Lasche ausbildenden Segment seines Umfangs. Im Falle einer Verwendung eines solchen Verschlusselements als Verschlussstopfen von Rohren für Leitungssysteme ergeben sich hieraus zwei Vorteile. Zum einen wird das Entfernen des Verschlussstopfens durch die Möglichkeit eines Angreifens an der an ihm ausgebildeten Lasche erleichtert. Zum anderen ließe sich aber ein mit einem solchen Verschlussstopfen verschlossenes Rohr, aufgrund dessen, dass die Anschlagfläche den Außendurchmesser des Rohres zumindest abschnittsweise überragt, ohne ein Entfernen des Verschlussstopfens nicht in einen Fitting einschieben, so dass das Entfernen des Stopfens im Grunde nicht vergessen werden kann. Allerdings weist ein in dieser Form ausgeführter Verschlussstopfen auch einen Nachteil auf. Dieser besteht darin, dass der üblicherweise stapelweise Transport und eine ebensolche Aufbewahrung einer Mehrzahl von Rohren durch einen in dieser Weise ausgebildeten Verschlussstopfen, nämlich durch dessen den Außendurchmesser der Rohre überragende Abschnitte, in nachteiliger Weise erschwert oder gar unmöglich gemacht wird.

Zumindest der letztgenannte Nachteil wird bei einem Verschlussstopfen, auf den in der DE 10 2009 051 025 A1 Bezug genommen wird, vermieden. Die Druckschrift selbst betrifft eine Vorrichtung zum Demontieren beziehungsweise zum Entfernen eines Verschlussstopfens von der Öffnung eines Rohres. Der darin offenbarte Verschlussstopfen weist auf seiner dem Rohrende abgewandten Seite eines Anschlags einen kurzen Verlängerungsabschnitt auf, dessen Außendurchmesser geringer ist als der des Rohres, wobei der Anschlag keinen den Außendurchmesser des Rohres überragenden Umfangsabschnitt in Form einer Lasche oder dergleichen aufweist. Somit wird ein stapelweiser Transport mit einem entsprechenden Verschlusstopfen versehener Rohre oder eine entsprechende Aufbewahrung nicht behindert. Allerdings ist ein solcher Verschlussstopfen aufgrund seiner Form teilweise schwer aus einem Rohrende zu entfernen, so dass Gegenstand der Druckschrift eine dazu verwendbare Vorrichtung mit einer Überwurfmutter und einem Ringflansch ist. Maßnahmen, die der Feststellung eines versehentlichen Verbleibs des beschriebenen Verschlusstopfens in einem Rohr bei dessen Verlegung und bei seiner Einfügung in ein Leitungssystem dienen könnten, werden in der Druckschrift nicht offenbart.

Von der Form her ähnliche, das heißt mit einem Verlängerungsabschnitt auf der dem Ende eines mittels ihrer verschlossenen Rohrendes abgewandten Seite versehene Verschlusstopfen werden auch durch die US 9,340,338 B1 und durch die US 2012/0192980 A1 beschrieben. Auch diese Druckschriften thematisieren aber Möglichkeiten zur Feststellung eines versehentlichen Verbleibs des jeweiligen Verschlusstopfens in einem Rohr bei dessen Montage in einem Leitungssystem nicht.

Aufgabe der Erfindung ist es, die zuvor beschriebenen Nachteile des Standes der Technik zu vermeiden. Hierzu soll ein Verschlussstopfen für Rohre bereitgestellt werden, dessen versehentliches Verbleiben in dem Rohr bei der Montage beziehungsweise bei der Verlegung eines Leitungssystems spätestens im Zusammenhang mit der Dichtheitsprüfung auffällt und der sich andererseits auf der Baustelle möglichst leicht entfernen lässt.

Die Aufgabe wird durch einen Verschlussstopfen mit den Merkmalen des Patentanspruchs 1 gelöst. Vorteilhafte Aus- sowie Weiterbildungen der Erfindung sind durch die Unteransprüche gegeben.

Der zur Lösung der Aufgabe vorgeschlagene Verschlussstopfen zum temporären Verschließen eines Rohres, das heißt zum Verschließen einer Rohröffnung an einem Rohrende, weist einen in das zu verschließende Rohr einzufügenden Halteabschnitt und einen beim Verschließen des Rohres an einer die zu verschließende Rohröffnung umgebenden Stirnfläche des Rohrendes zur Anlage gelangenden Anschlag auf. Der Außendurchmesser des vorgenanntes Halteabschnitts entspricht an seiner größten Stelle vorzugsweise annähernd dem Innendurchmesser des zu verschließenden Rohres, ist aber jedenfalls, zumindest dann, wenn das Material des Halteabschnitts inkompressibel ist, geringfügig kleiner als dieser Rohrinnendurchmesser. Mittels des in das zu verschließende Rohr einzufügenden Halteabschnitts, wird der Verschlussstopfen vorzugsweise durch einen zwischen dem Halteabschnitt und der Innenwand des Rohres entstehenden Kraftschluss derart an dem Rohr festgehalten, dass er sich beim Transport des Rohres, bei dessen Lagerhaltung und bei seiner Handhabung auf der Baustelle nicht unbeabsichtigt vom Rohr löst. Hierdurch wird sichergestellt, dass bis zum Einbau des Rohres in ein Leitungssystem keinerlei Verunreinigungen in das Rohr eindringen. Demgemäß sind üblicherweise alle freien, eine Rohröffnung aufweisenden Rohrenden eines Rohres mit einem entsprechenden Verschlussstopfen versehen. Der Halteabschnitt weist vorzugsweise, jedoch nicht zwingend, einen im Wesentlichen kreisförmigen Querschnitt auf. Seine Außenfläche kann beispielsweise zur Ausbildung von Rückhaltekonturen profiliert sein, durch welche beim Einschieben des Halteabschnitts in ein Rohr ein Reibschluss beziehungsweise Kraftschluss mit der Innenwand des zu verschließenden Rohrendes entsteht.

Wie bereits ausgeführt, weist der Verschlussstopfen neben dem Halteabschnitt einen mit diesem typischerweise einstückig verbundenen Anschlag auf. Hierbei handelt es sich um einen Abschnitt, dessen Außendurchmesser zumindest in einem Umfangssegment größer ist als der Durchmesser des Halteabschnitts und auch größer als der Innendurchmesser des Rohres. Dabei weist der den Anschlag ausbildende Abschnitt zumindest auf dem vorgenannten Umfangssegment, vorzugsweise aber über seinen gesamten Umfang hinweg, einen Durchmesser auf, welcher dem Außendurchmesser des Rohres entspricht, ihn also nicht überragt. In diesem Umfangssegment, welches sich aufgrund seines gegenüber dem Innendurchmesser des Rohres größeren Durchmessers nicht in das Rohr einschieben beziehungsweise einbringen lässt, gelangt der Verschlussstopfen, das heißt sein Anschlag, beim Verschließen des Rohres mit einer sich quer zur Rohrachse erstreckenden Anschlagfläche an der die zu verschließende Rohröffnung umgebenden Stirnfläche des Rohrendes zur Anlage.

Der Verschlussstopfen weist auf der dem Rohrende abgewandten Seite seines Anschlags einen Verlängerungsabschnitt auf, dessen Länge erfindungsgemäß größer ist als die Aufnahmelänge eines hinsichtlich seinen Innendurchmessers erweiterten Einsteckbereichs jedes zur Verbindung des Rohres mit anderen Elementen eines (neu montierten oder zu montierenden) Leitungssystems vorgesehenen Rohrverbinders. In diesem Verlängerungsabschnitt ist der Außendurchmesser des Verschlussstopfens geringer als der Innendurchmesser des vorgenannten Einsteckbereichs eines jeweiligen Rohrverbinders und vorzugsweise auch geringer als der Außendurchmesser des temporär mit ihm verschlossenen Rohrendes, aber jedenfalls größer als der Innendurchmesser des sich an den hinsichtlich seines Durchmessers erweiterten Einsteckbereich desselben Rohrverbinders anschließenden Rohrverbinderabschnitts.

Die Ausbildung des Verschlussstopfens mit einem in der zuvor beschriebenen Weise bemessenen Verlängerungsabschnitt hat zur Folge, dass der Verlängerungsabschnitt, im Falle eines versehentlichen Verbleibs des Verschlussstopfens an einem in den Rohrverbinder eingefügten Rohr, zwar in den Einsteckbereich des Rohrverbinders eingeschoben werden kann, aber jedenfalls aus dem Einsteckbereich des Rohrverbinders herausragt. Dies wiederum führt dazu, dass in dem Bereich, in welchem der Verlängerungsabschnitt aus dem Einsteckbereich des Rohrverbinders herausragt, gewolltermaßen eine Undichtigkeit entsteht. Hierdurch wird ein eventueller ungewollter Verbleib des Verschlussstopfens an einem mit anderen Elementen eines Leitungssystems zu verbindenden Rohrende spätestens im Zuge der sich nach der Montage anschließenden Dichtheitsprüfung bemerkt, da über die zuvor genannte gewollte Undichtigkeit das Prüfmedium - also die üblicherweise zur Dichtheitsprüfung verwendete Druckluft - entweicht und somit der Prüfdruck nicht aufrechterhalten bleibt. Genauere Erläuterungen hierzu sollten später noch im Zusammenhang mit der Darstellung eines Ausführungsbeispiels erfolgen. Darüber hinaus ermöglicht der Verlängerungsabschnitt ein gutes Angreifen am Verschlussstopfen, so dass dieser vor der Montage eines mit ihm versehenen Rohrendes leicht aus diesem entfernt werden kann.

Der Verlängerungsabschnitt kann einen kreisrunden, einen kreisförmigen oder kreisähnlichen Querschnitt, aber auch einen mehreckigen Querschnitt, wie beispielsweise einen sechseckigen Querschnitt, oder gar einen polygonalen Querschnitt aufweisen. Unabhängig davon kann der Verlängerungsabschnitt des Verschlussstopfens aber außerdem, entsprechend einer vorgesehenen Weiterbildung der Erfindung, insbesondere im Falle einer Ausbildung mit einem ansonsten kreisrunden Querschnitt, auf seiner Außenfläche eine Profilierung aufweisen, durch welche im Falle eines versehentlichen Verbleibs des Verschlussstopfens an dem Rohr die zuvor angesprochene, gewolltermaßen erzeugte Undichtigkeit noch verstärkt wird.

Eine Möglichkeit für eine solche Profilierung besteht dabei darin, dass der Verlängerungsabschnitt auf seiner Außenfläche eine oder mehrere sich vom freien Ende des Verlängerungsabschnitts bis zum Anschlag, also über die gesamte Länge des Verlängerungsabschnitts erstreckende Nuten oder Kerben aufweist. Im Falle dessen, dass die zur Systemprüfung verwendete Druckluft in Bezug auf den versehentlich im Rohr verbliebenen Verschlussstopfen auf der Seite des Verlängerungsabschnitts in das System eingebracht wird, wird hierdurch erreicht, dass die Druckluft über die Nut oder Nuten beziehungsweise über die Kerbe oder Kerben in Richtung des Anschlags des Verschlussstopfens und damit in Richtung des den Einsteckbereich des Rohrverbinders überragenden Endes des Verlängerungsabschnitts strömt und dort aus dem System austritt.

Eine andere, insbesondere bei einem ansonsten kreisförmigen Querschnitt des Verlängerungsabschnitts in Betracht zu ziehende Möglichkeit besteht darin, dass der Verlängerungsabschnitt des Verschlussstopfens auf seinem Außenumfang eine oder mehrere sich vom freien Ende des Verlängerungsabschnitts bis zum Anschlag, das heißt also über die gesamte axiale Länge des Verlängerungsabschnitts erstreckende Anflächungen aufweist. Auf der Seite des Verlängerungsabschnitts eines versehentlich im Rohr verbliebenen Verschlussstopfens, also auf der dem Halteabschnitt des betreffenden Verschlussstopfens abgewandten Seite, in das System zum Zweck der Druckprüfung eingebrachte Druckluft kann hierdurch ebenso wie im Falle des Einbringens von Nuten in den Verlängerungsabschnitt einfacher in Richtung des Anschlags des Verschlussstopfens strömen und hier im Bereich des den Einsteckbereich eines Rohrverbinders überragenden Endes des Verlängerungsabschnitts des Verschlussstopfens aus dem System austreten.

Die zuletzt beschriebene Variante mit einer oder mehreren Anflächungen auf dem Umfang des Verlängerungsabschnitts weist den Vorteil auf, dass die mindestens eine Anflächung außerdem als Informationsfläche genutzt werden kann. Auf dieser Fläche lassen sich zum Beispiel Informationen zu Eigenschaften des mit dem Verschlussstopfen verschlossenen Rohres, Informationen über den Rohrhersteller oder Werbeinformationen auftragen.

Entsprechend einer vorteilhaften Ausgestaltung eines erfindungsgemäß ausgebildeten Verschlussstopfens, bei welchem der Halteabschnitt und der Verlängerungsabschnitt des Verschlussstopfens hohl ausgebildet und an ihren freien, dem Anschlag abgewandten Enden offen sind, ist im Innern des Verschlussstopfens, nämlich im Bereich seines Anschlags, eine sich quer zur Längserstreckung des Verschlussstopfens erstreckende Membran angeordnet. Diese Membran fungiert als Berstmembran. Sie ist dabei so ausgelegt, dass sie im Falle einer Beaufschlagung eines unter versehentlichem Verbleib des Verschlussstopfens in einen Rohrverbinder eingefügten Rohres mit einem gegenüber dem zur Dichtheitsprüfung verwendeten Prüfdruck geringeren Druck (Berstdruck) sicher zerstört wird. Hierdurch wird der Gefahr begegnet, dass der Verschlussstopfen so fest in dem Rohr sitzt, dass nach erfolgter Montage des Rohrs bei der sich anschließenden Druckprüfung, im Falle dessen, dass das Prüfmedium (Druckluft) auf der Seite des Halteabschnitts in das in den Rohrverbinder eingefügte Rohr eingeleitet wird, dieses den Bereich mit dem verbliebenen Verschlussstopfen nicht durchströmen kann, so dass zutreffend oder auch fälschlicherweise von der Dichtheit des gebildeten Leitungssystems ausgegangen wird, das Leitungssystem aber später von dem darin zu transportierenden Medium nicht durchströmt werden kann. Hierdurch ist eine erhöhte Sicherheit bei der Fehlerdiagnose gegeben. Eine entsprechende Membran ist vorzugsweise so auszulegen, dass sie zwar, wie schon ausgeführt, bereits bei einer Beaufschlagung mit einem Druck unterhalb des Prüfdrucks sicher birst, aber andererseits nicht schon beim normalen Handling mittels des Verschlussstopfens verschlossener Rohre auf der Baustelle oder durch Erschütterungen während des Transports der Rohre zerstört wird. So wird verhindert, dass beispielsweise im Falle dessen, dass die Rohre auf der Baustelle unbeabsichtigt mit flüssigen Medien in Kontakt kommen, diese trotz des Vorhandenseins des Verschlussstopfens als ungewollte Verunreinigungen in die Rohre eindringen können. Die insoweit jeweils konkrete Auslegung der Membran ist unter anderem von Faktoren wie dem Durchmesser der Rohre und des aufgrund dessen für sie zu verwendenden Verschlussstopfens und von der Art des Membranmaterials abhängig, durch einen Fachmann aber ohne Schwierigkeiten vorzunehmen.

Schließlich kann der erfindungsgemäße Verschlussstopfen noch dadurch weitergebildet sein, dass dessen Verlängerungsabschnitt mindestens einen quer zu seiner Längserstreckung verlaufenden Durchbruch aufweist. Sofern dieser Durchbruch hinreichend groß ist, kann in diesen ein Hilfswerkzeug eingefügt werden, mittels welchem der Verschlussstopfen bei der Montage des Rohrs im Baustellenbetrieb noch leichter aus dem Rohr entfernt werden kann.

Alternativ oder kumulativ zu dem vorgenannten Durchbruch zum Einführen eines Hilfswerkzeugs kann die Außenfläche des Verlängerungsabschnitts zur Erleichterung des Entfernens des Verschlussstopfens aus einem Rohr auch einen oder mehrere sich über einen Umfangsabschnitt des Verlängerungsabschnitts erstreckende oder über den vollen Umfang umlaufende Eingriffe aufweisen. In diese kann zum Entfernen des Verschlussstopfens mit der Hand oder ebenfalls mit einem geeigneten Hilfswerkzeug eingegriffen werden. Ein entsprechender Eingriff kann insbesondere in Form einer Nut oder Kerbe, rinnenförmig oder ähnlich ausgebildet sein. Soweit sich der Eingriff nicht über den gesamten Umfang der Außenfläche beziehungsweise des Mantels des Verlängerungsabschnitts erstreckt, kann der Verlängerungsabschnitt des Verschlussstopfens in diesem Bereich (auch ohne das Vorhandensein einer bereits früher erwähnten, sich in seiner Längsrichtung erstreckenden Anflächung, Nut oder Kerbe) eine von der ansonsten bevorzugten Kreisform abweichende Querschnittsform aufweisen.

Nachfolgend sollen Ausführungsbeispiele für die Erfindung gegeben und anhand von Zeichnungen erläutert werden. In den einzelnen Zeichnungen zeigen:
- Fig. 1:: ein unter Verbleib eines erfindungsgemäß ausgebildeten Verschlussstopfens in den Einsteckbereich eines Rohrverbinders eingefügtes Rohrende,
- Fig. 2a:: eine mögliche Ausbildungsform des erfindungsgemäßen Verschlussstopfens in einer Seitenansicht,
- Fig. 2b:: den Verschlussstopfen gemäß Fig. 2a mit einer Anflächung der Außenfläche des Verlängerungsabschnitts,
- Fig. 2c:: den Verschlussstopfen gemäß Fig. 2a mit einer in die Außenfläche des Verlängerungsabschnitts eingebrachten Kerbe,
- Fig. 3:: eine weitere mögliche Ausbildungsform des erfindungsgemäßen Verschlussstopfens,
- Fig. 4:: ein, wie vorgesehen, nach dem Entfernen des Verschlussstopfens in einen Rohrverbinder eingestecktes Rohrende,
- Fig. 5:: ein mit einem Verschlussstopfen nach dem Stand der Technik verschlossenes Rohrende.

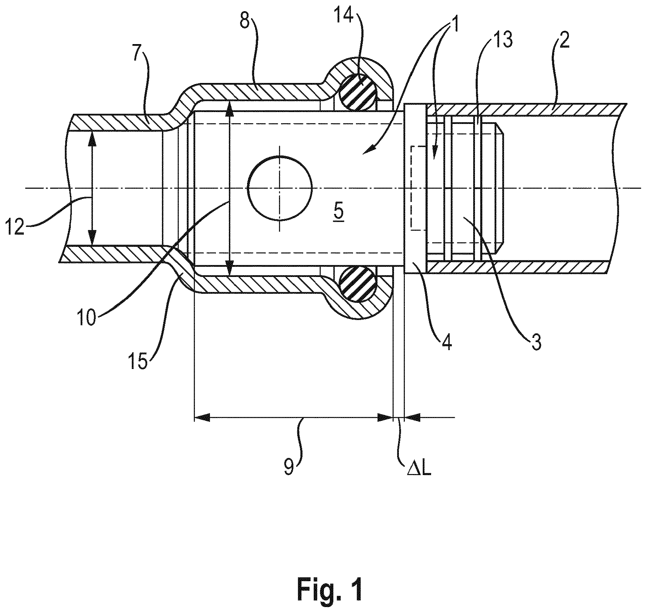

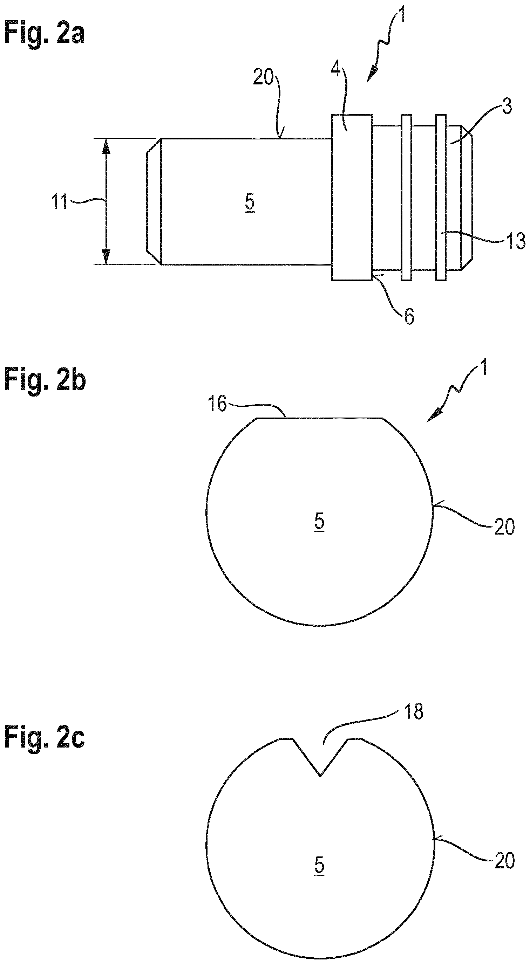

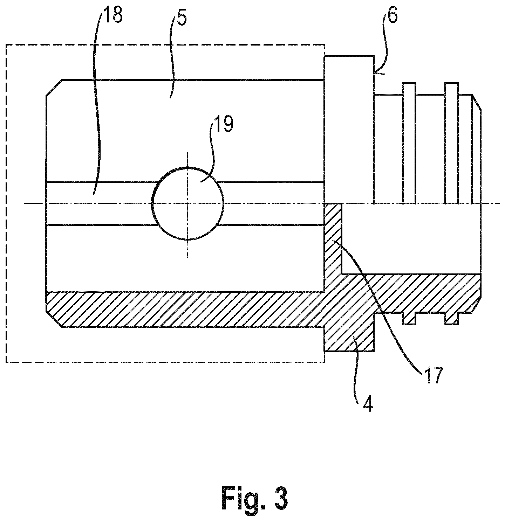

Die Fig. 1 zeigt ein unter versehentlichem Verbleib des erfindungsgemäß ausgebildeten Verschlussstopfens 1 in den Einsteckbereich 8 eines Rohrverbinders 7 eingefügtes Rohrende 2. In der einen Teil eines Rohrverbinders 7 und das in den Rohrverbinder 7 eingeschobene Rohrende 2 mit einem darin verbliebenen Verschlussstopfen 1 zeigenden Fig. 1 sind die vorgenannten Teile im Schnitt dargestellt. Der Verschlussstopfen 1 weist einen Halteabschnitt 3 mit daran ausgebildeten Rückhaltekonturen 13, einen Anschlag 4 mit Anschlagflächen 6 (siehe dazu Fig. 2a oder Fig. 3) und den erfindungsgemäß ausgebildeten Verlängerungsabschnitt 5 auf. Mittels des Halteabschnitts 3 wird der Verschlussstopfen 1 bis zur Montage des Rohres, also bis zum Einstecken des Rohrendes 2 in den Rohrverbinder 7, gewolltermaßen - hier durch einen Kraftschluss - in der mit ihm verschlossenen Rohröffnung des Rohrendes 2 festgehalten.

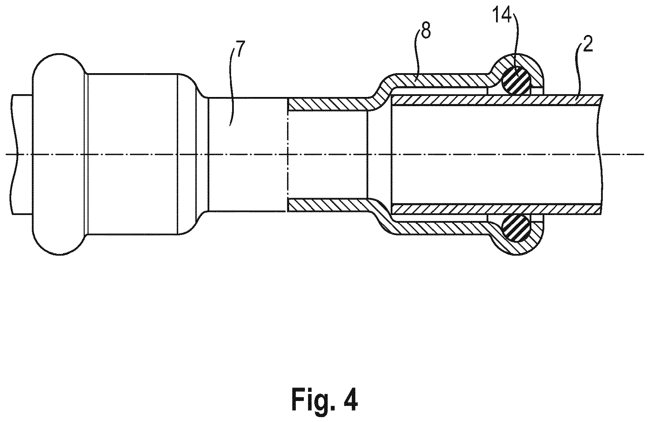

Sofern der Verschlussstopfen 1, wie vorgesehen, vor dem Zusammenfügen des Rohrendes 2 und des Rohrverbinders 7 aus der Rohröffnung am Rohrende 2 entfernt wird, ist bei der aus dem Rohr und dem Rohrverbinder 7 gebildeten Anordnung in dem Übergangsbereich zwischen Rohrverbinder 7 und Rohrende 2 aufgrund eines eingangs des Rohrverbinders 7, also an dem freien Ende seines Einsteckbereichs 8 vorgesehenen Dichtelements 14, die Dichtheit gewährleistet - siehe hierzu auch Fig. 4. Zur Gewährleistung der Dichtheit können der Einsteckbereich 8 und das darin eingefügte Rohrende 2 gegebenenfalls zusätzlich miteinander verpresst sein.

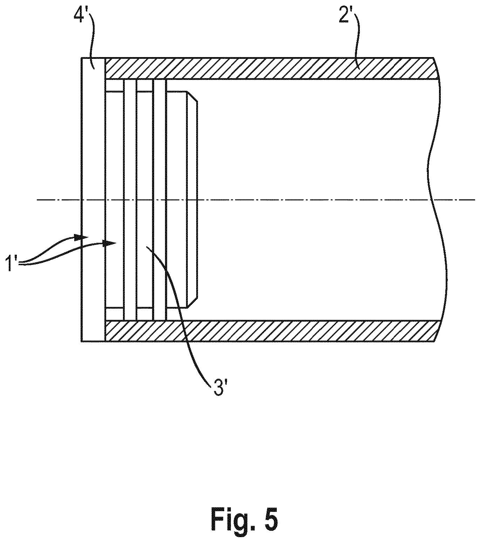

Die Dichtheit wird durch eine sich an die Montage (Verbindung von Rohrende 2 und Rohrverbinder 7) anschließende Dichtheitsprüfung überprüft. Hierzu wird in das gebildete Leitungssystem mit einem Druck (Prüfdruck) beaufschlagte Luft eingebracht. Bleibt der Prüfdruck für eine vorgegebene Zeit der Prüfung stabil, kann normalerweise von der Dichtheit des Systems ausgegangen werden. In der Praxis kann sich dies jedoch als Trugschluss erweisen, nämlich dann, wenn ein die Rohröffnung am Rohrende 2 während des Transports und der Lagerung verschließender, nach dem Stand der Technik ausgebildeter Verschlussstopfen (siehe zum Beispiel Verschlussstopfen 1' gemäß Fig. 5) vor dem Zusammenfügen des Rohrendes 2 und des Rohrverbinders 7 versehentlich nicht entfernt wird. Zwar ist das System aus dem Rohrverbinder 7 und dem unter Verbleib des Verschlussstopfens in diesen eingefügten Rohres möglicherweise tatsächlich dicht, jedoch kann es im späteren Einsatz aufgrund des in der Rohröffnung verbliebenen Verschlussstopfens von dem zu transportierenden Medium, beispielsweise Wasser, nicht durchströmt werden.

Um auf einen möglicherweise bei der Montage in einer Rohröffnung verbliebenen Verschlussstopfen bei der Dichtheitsprüfung aufmerksam zu werden, ist der erfindungsgemäße Verschlussstopfen 1, wie aus der Fig. 1 ersichtlich, um einen Verlängerungsabschnitt 5 verlängert, dessen Länge um einen Betrag ΔL größer ist als die Aufnahmelänge 9 des Einsteckbereichs 8 des Rohrverbinders 7. Hierbei ist anzumerken, dass die Rohrverbinder 7 unter anderem auch im Hinblick auf die Aufnahmelänge 9 ihres Einsteckbereichs 8 genormt sind. Hiervon ausgehend ist es ohne weiteres möglich, den erfindungsgemäß vorgesehenen Verlängerungsabschnitt 5 des Verschlussstopfens 1 entsprechend zu dimensionieren. Zur Erfüllung seiner erfindungsgemäß vorgesehenen Funktion, nämlich des Schaffens einer Undichtigkeit am Einsteckbereich 8 des Rohrverbinders 7, ist es dabei ausreichend, wenn der Verlängerungsabschnitt 5 eines beim Zusammenstecken von Rohrende 2 und Rohrverbinder 7 versehentlich in dem Rohr verbliebenen Verschlussstopfens 1 die Aufnahmelänge 9 des Einsteckbereichs 8 um ein ΔL von bis zu 1 cm, vorzugsweise von wenigen Millimetern, überragt. In jedem Falle weist der Verlängerungsabschnitt 5 des Verschlussstopfens 1 einen Außendurchmesser 11 auf, der maximal so groß ist wie Rohraußendurchmesser, vorzugweise geringfügig kleiner. Hierdurch ist insbesondere sichergestellt, dass eine gestapelte Lagerung von mit Verschlussstopfen 1 versehenen Rohren nicht durch bezüglich ihres Durchmessers überstehende Verschlussstopfen 1 behindert wird.

Ferner ist der Außendurchmesser 11 (siehe Fig. 2a) des Verlängerungsabschnitts 5 in jedem Falle kleiner als der Innendurchmesser 10 des Einsteckbereichs 8 des Rohrverbinders 7, aber größer als der Innendurchmesser 12 des Rohrverbinders 7 in seinem sich an den hinsichtlich des Innendurchmessers erweiterten Einsteckbereich 8 anschließenden Abschnitt. Der Verlängerungsabschnitt 5 eines versehentlich bei der Montage von Rohrverbinder 7 und Rohr in der Rohröffnung des Rohrendes 2 verbliebenen Verschlussstopfens 1 gelangt somit beim Einstecken in den Rohrverbinder 7 an einer im Übergangsbereich zwischen dem querschnittserweiterten Einsteckbereich 8 und dem sich daran anschließenden Abschnitt mit verringertem Querschnitt gebildeten Schulter 15 zu Anlage. Er kann somit nicht über diese Schulter 15 hinaus in den Rohrverbinder 7 eingeschoben werden.

Gleichzeitig ragt der Verlängerungsabschnitt 5 aufgrund seiner Länge zumindest minimal aus dem Rohrverbinder 7, das heißt aus dessen Einsteckbereich 8, heraus. Hierdurch ist im Bereich des freien Endes des Rohrverbinders 7, also eingangs seines Einsteckbereichs 8, gewolltermaßen eine Undichtigkeit gebildet, über welche bei der sich an die Montage anschließenden Druckprüfung die hierfür verwendete Druckluft entweicht. Der aufgrund dessen nicht konstant bleibende Prüfdruck weist dann eine die Prüfung vornehmende Person darauf hin, dass entweder ein Verschlussstopfen 1 in einer Rohröffnung verblieben ist oder unabhängig davon eine Undichtigkeit im System vorliegt.

Die Fig. 2a zeigt eine mögliche Ausbildungsform des erfindungsgemäßen Verschlussstopfens 1 in einer Seitenansicht. In den Fig. 2b und 2c sind zwei sich hinsichtlich der Form des Verlängerungsabschnitts 5 unterscheidende Varianten dieser Ausbildungsform mit Blick auf die Stirnseite des Verlängerungsabschnitts 5 des erfindungsgemäß ausgebildeten Verschlussstopfens 1 dargestellt.

Bei der in der Fig. 2b gezeigten Ausbildungsform ist auf der Außenfläche 20 des ansonsten hinsichtlich seines Querschnitts kreisrunden Verlängerungsabschnitts 5 eine sich über die gesamte axiale Länge des Verlängerungsabschnitts 5 erstreckende Anflächung 16 ausgebildet. Dies ist in der Fig. 2b gut zu erkennen. Durch diese Anflächung 16 wird die im Falle eines Verbleibs des Verschlussstopfens 1 bei der Montage eines Rohres in einem Rohrverbinder 7 gewolltermaßen erzeugte Undichtigkeit gewissermaßen verstärkt beziehungsweise zusätzlich unterstützt, so dass sichergestellt ist, dass der versehentliche Verbleib des Verschlussstopfens 1 in der Rohröffnung bei der Dichtheitsprüfung auf jeden Fall zutage tritt. Zusätzlich kann die vorgesehene Anflächung 16 besonders vorteilhaft als Informationsfläche genutzt werden, auf welcher Informationen zu Eigenschaften des mit dem Verschlussstopfen 1 versehenen Rohres, zu dessen Hersteller oder Werbebotschaften aufgetragen werden können. Selbstverständlich kann aber auch die gesamte Außenfläche des Verlängerungsabschnitts 5 für das Aufbringen von Informationen oder Werbebotschaften genutzt werden.

Bei der in der Fig. 2c dargestellten Variante weist der Verlängerungsabschnitt 5 anstatt einer Anflächung 16 eine in seine Außenfläche 20 eingebrachte, sich über die gesamte axiale Länge des Verlängerungsabschnitts 5 erstreckende Kerbe 18 auf. Diese Kerbe 18 stellt eine andere Variante dar, die erfindungsgemäß gewolltermaßen im Bereich des Eingreifens des Verlängerungsabschnitts 5 in einen Rohrverbinder 7 (Fitting) erzeugte Undichtigkeit zu verstärken. Gleiches kann außerdem mittels einer in die Mantel- beziehungsweise Außenfläche 20 eingebrachten Nut erreicht werden. Dem Fachmann ist dabei klar, dass die zuvor dargestellten Maßnahmen (Anflächung, Kerbe oder Nut) selbstverständlich auch kumulativ und/oder mehrfach vorhanden sein können. Darüber hinaus sind zur Erreichung desselben Zwecks andere Maßnahmen zur Veränderung der Geometrie des ansonsten vorzugsweise einen Kreisquerschnitt aufweisenden Verlängerungsabschnitts 5 denkbar.

Die Fig. 3 zeigt eine vorteilhafte Weiterbildung des Verschlussstopfens 1 wie sie im Übrigen auch Teil der in der Fig. 1 gezeigten Anordnung aus Rohrverbinder 7, in den Rohrverbinder 7 eingefügtem Rohrende 2 sowie darin verbliebenen Verschlussstopfen 1 ist. Bei dieser Ausgestaltungsform, welche in der Fig. 3 in teilgeschnittener Darstellung gezeigt ist, ist in dem Bereich des Anschlags 4 des Verschlussstopfens 1 in dessen Innern eine Membran 17 ausgebildet, die als Berstmembran fungiert. Die Membran 17 stellt im Falle eines Eintrags des zur Dichtheitsprüfung verwendeten Druckmediums auf der Seite des Halteabschnitts 3 des Verschlussstopfens 1 sicher, dass das Prüfmedium, also vorzugsweise die Druckluft an der aufgrund der erfindungsgemäßen Ausbildung des Verschlussstopfens 1 ausgebildeten Undichtigkeit auf jeden Fall austreten kann. Hierzu ist die Membran 17 so beschaffen, dass sie bei der Beaufschlagung des Rohres und damit des Verschlussstopfens 1 mit einem Druck unterhalb des Prüfdrucks birst. Da die jeweiligen Prüfverfahren zur Prüfung von Leitungssystemen standardisiert sind und somit auch der Prüfdruck für das Prüfmedium festgelegt ist - so erfolgt etwa die Prüfung von Rohleitungssystemen für Wasser nach derzeit geltenden Standards mit Druckluft unter einem Druck von 10 bar - ist eine entsprechende Auslegung der Membran 17 für den Fachmann ohne Schwierigkeiten möglich.

Bei der in der Fig. 3 dargestellten Ausbildungsform ist außerdem in dem hier mit einer Nut 18 zur Unterstützung der Undichtigkeit versehenen Verlängerungsabschnitt 5 noch ein sich quer zur axialen Längserstreckung des Verschlussstopfens 1 erstreckender Durchbruch 19 ausgebildet. In diesen kann vor der Montage des Rohres in dem Rohrverbinder 7 ein Hilfswerkzeug eingeführt werden, mittels welchem das Entfernen des Verschlussstopfens 1 aus der Rohröffnung erleichtert wird. Wie bereits früher ausgeführt, können zum selben Zweck alternativ oder kumulativ auch ein oder mehrere sich über einen Umfangsabschnitt oder den gesamten Umfang des Verlängerungsabschnitts 5 erstreckende, gegebenenfalls dessen Querschnittsgeometrie bereichsweise verändernde Eingriffe in die Außenfläche 20 des Verlängerungsabschnitts 5 eingebracht werden.

Die Fig. 4 zeigt zur Verbesserung des Verständnisses den Teil eines Rohrverbinders 7 und ein in dessen Einsteckbereich 8 in richtiger Weise, nämlich unter vorheriger Entfernung eines Verschlussstopfens, eingefügtes Rohrende 2. Eingangs des Einsteckbereichs 8 des Rohrverbinders 7 ist in diesen im Bereich einer dazu entsprechend ausgebildeten Innenkontur als Dichtelement 14 ein Dichtring eingefügt. Bei richtiger Montage, einschließlich Entfernung des Verschlussstopfens 1 wird hierdurch die Dichtheit des Systems im Übergangsbereich zwischen Rohrende 2 und Rohrverbinder 7 gewährleistet, was sich entsprechend bei der nachfolgenden Druckprüfung auch zutreffend bestätigt.

Die Fig. 5 zeigt vervollständigend nochmals ein Rohrende 2, verschlossen mit einem Verschlussstopfen 1' nach dem Stand der Technik, welcher grundsätzlich mit dem erfindungsgemäßen Verschlussstopfen 1 vergleichbar ist, also über einen Haftabschnitt 3' und einen Anschlag 4' verfügt, aber anders als dieser, keinen Verlängerungsabschnitt 5 aufweist. Die mit dem erfindungsgemäßen Verschlussstopfen 1 vergleichbaren Elemente beziehungsweise Merkmale des Verschlussstopfens 1' nach dem Stand der Technik sind in der Darstellung mit gleichen, aber einen Hochstrich aufweisenden Bezugszeichen versehen.

Bezugszeichen
- 1: Verschlussstopfen
- 2: Rohrende
- 3: Haftabschnitt
- 4: Anschlag
- 5: Verlängerungsabschnitt
- 6: Anschlagfläche
- 7: Rohrverbinder
- 8: Einsteckbereich (des Rohrverbinders 7)
- 9: Aufnahmelänge
- 10: Innendurchmesser (des Einsteckbereichs)
- 11: Außendurchmesser (des Verlängerungsabschnitts)
- 12: Innendurchmesser
- 13: Rückhaltekontur
- 14: Dichtelement
- 15: Schulter
- 16: Anflächung
- 17: Membran
- 18: Kerbe
- 19: Durchbruch
- 20: Außenfläche des Verlängerungsabschnitts 5

## Patentansprüche

1. Verschlussstopfen (1) zum temporären Verschließen eines Rohres, nämlich zum Verschließen einer Rohröffnung an einem Rohrende (2), aufweisend einen in das zu verschließende Rohr einzufügenden, den Verschlussstopfen (1) an dem Rohr haltenden Halteabschnitt (3) und einen beim Verschließen des Rohres mit mindestens einer Anschlagfläche (6) an einer die zu verschließende Rohröffnung umgebenden Stirnfläche des Rohrendes (2) zur Anlage gelangenden Anschlag (4), dessen maximaler Durchmesser gleich dem Außendurchmesser des Rohres an dem Rohrende (2) mit der zu verschließenden Rohröffnung ist, wobei der Verschlussstopfen (1) auf der dem Rohrende (2) mit der zu verschließenden Rohröffnung abgewandten Seite seines Anschlags (4) einen Verlängerungsabschnitt (5) aufweist, **dadurch gekennzeichnet, dass** die Länge des Verlängerungsabschnitts (5) um einen Betrag ΔL größer ist als die Aufnahmelänge (9) eines hinsichtlich seines Innendurchmessers erweiterten Einsteckbereichs (8) jedes zur Verbindung des Rohres mit anderen Elementen eines Leitungssystems vorgesehenen Rohrverbinders (7), wobei der Außendurchmesser (11) des Verschlussstopfens (1) in seinem Verlängerungsabschnitt (5) geringer ist als der Innendurchmesser (10) des Einsteckbereichs (8) eines jeweiligen Rohrverbinders (7), aber größer als der Innendurchmesser (12) eines sich an den Einsteckbereich (8) desselben Rohrverbinders (7) anschließenden Rohrverbinderabschnitts.

2. Verschlussstopfen (1) nach Anspruch 1, **dadurch gekennzeichnet, dass** dessen Verlängerungsabschnitt (5) auf seiner Außenfläche (20) profiliert ist, so dass im Falle eines beim Einstecken des Rohrendes (2) in den Einsteckbereich (8) eines Rohrverbinders (7) versehentlichen Verbleibens des Verschlussstopfens (1) an dem Rohr eine aufgrund der die Aufnahmelänge (9) des Einsteckbereichs (8) überragenden Länge des Verlängerungsabschnitts (5) erzeugte Undichtigkeit verstärkt wird.

3. Verschlussstopfen (1) nach Anspruch 2, **dadurch gekennzeichnet, dass** der Verlängerungsabschnitt (5) auf seinem Außenumfang eine oder mehrere sich vom freien Ende des Verlängerungsabschnitts (5) bis zum Anschlag (4) erstreckende Nuten und/oder Kerben (18) aufweist.

4. Verschlussstopfen (1) nach Anspruch 2 oder 3, **dadurch gekennzeichnet, dass** der Verlängerungsabschnitt (5) auf seinem Außenumfang eine oder mehrere sich vom freien Ende des Verlängerungsabschnitts (5) bis zum Anschlag (4) erstreckende Anflächungen (16) aufweist.

5. Verschlussstopfen (1) nach einem der Ansprüche 1 bis 4, wobei der Halteabschnitt (3) und der Verlängerungsabschnitt (5) des Verschlussstopfens (1) hohl ausgebildet und an ihren freien, dem Anschlag (4) abgewandten Enden offen sind, **dadurch gekennzeichnet, dass** innerhalb des Anschlags (4) eine sich quer zur Längserstreckung des Verschlussstopfens erstreckende Membran (17) angeordnet ist, welche derart ausgelegt ist, dass sie bei einer Beaufschlagung mit einem Druck unterhalb eines zur Prüfung der Dichtheit montierter Leitungssysteme verwendeten Prüfdrucks birst.

6. Verschlussstopfen (1) nach einem der Ansprüche 1 bis 5, **dadurch gekennzeichnet, dass** der Verlängerungsabschnitt mindestens einen quer zu seiner Längserstreckung verlaufenden Durchbruch (19) aufweist.

7. Verschlussstopfen (1) nach einem der Ansprüche 1 bis 6, **dadurch gekennzeichnet, dass** die Außenfläche (20) des Verlängerungsabschnitts (5) einen oder mehrere sich über einen Umfangsabschnitt erstreckende oder auf dem Umfang des Verlängerungsabschnitts (5) umlaufende Eingriffe aufweist.

## Claims

1. Closure plug (1) for temporary closure of a pipe, specifically for closure of a pipe opening at a pipe end (2), having a holding portion (3), which is to be inserted into the pipe to be closed off and holds the closure plug (1) against the pipe, and having a stop (4), which, by way of at least one stop surface (6), comes to bear against an end surface, surrounding the pipe opening to be closed off, of the pipe end (2) during the closure of the pipe and whose maximum diameter is equal to the outer diameter of the pipe at the pipe end (2) with the pipe opening to be closed off, wherein the closure plug (1) has a lengthening portion (5) on that side of its stop (4) which faces away from the pipe end (2) with the pipe opening to be closed off, **characterized in that** the length of the lengthening portion (5) is greater by an amount ΔL than the receiving length (9) of a plug-in region (8), enlarged in terms of its inner diameter, of any pipe connector (7) provided for connecting the pipe to other elements of a line system, wherein the outer diameter (11) of the closure plug (1), in its lengthening portion (5), is smaller than the inner diameter (10) of the plug-in region (8) of a respective pipe connector (7) but is greater than the inner diameter (12) of a pipe connector portion which adjoins the plug-in region (8) of the same pipe connector (7).

2. Closure plug (1) according to Claim 1, **characterized in that** the lengthening portion (5) thereof is profiled on its outer surface (20) such that, in the event of the closure plug (1) inadvertently remaining on the pipe in the case of the pipe end (2) being plugged into the plug-in region (8) of a pipe connector (7), a leakiness generated on account of the length of the lengthening portion (5), said length exceeding the receiving length (9) of the plug-in region (8), is increased.

3. Closure plug (1) according to Claim 2, **characterized in that** the lengthening portion (5) has on its outer circumference one or more grooves and/or notches (18) extending from the free end of the lengthening portion (5) as far as the stop (4).

4. Closure plug (1) according to Claim 2 or 3, **characterized in that** the lengthening portion (5) has on its outer circumference one or more flattenings (16) extending from the free end of the lengthening portion (5) as far as the stop (4).

5. Closure plug (1) according to one of Claims 1 to 4, wherein the holding portion (3) and the lengthening portion (5) of the closure plug (1) are of hollow form and are open at their free ends, which face away from the stop (4), **characterized in that**, within the stop (4), there is arranged a diaphragm (17) which extends transversely with respect to the longitudinal extent of the closure plug and which is designed in such a way that it bursts if subjected to a pressure below a test pressure used for testing the leak tightness of installed line systems.

6. Closure plug (1) according to one of Claims 1 to 5, **characterized in that** the lengthening portion has at least one aperture (19) extending transversely with respect to its longitudinal extent.

7. Closure plug (1) according to one of Claims 1 to 6, **characterized in that** the outer surface (20) of the lengthening portion (5) has one or more engagement means extending over a circumferential portion or running around the circumference of the lengthening portion (5).

## Revendications

1. Bouchon de fermeture (1) pour la fermeture temporaire d'un tuyau, à savoir pour la fermeture d'une ouverture de tuyau à une extrémité de tuyau (2), présentant une portion de retenue (3) devant être insérée dans le tuyau à fermer, retenant le bouchon de fermeture (1) sur le tuyau et une butée (4) venant en appui lors de la fermeture du tuyau avec au moins une première surface de butée (6) au niveau d'une surface frontale de l'extrémité de tuyau (2) entourant l'ouverture de tuyau à fermer, dont le diamètre maximal est égal au diamètre extérieur du tuyau au niveau de l'extrémité de tuyau (2) ayant l'ouverture de tuyau à fermer, le bouchon de fermeture (1) présentant une portion de prolongement (5) du côté de sa butée (4) opposé à l'extrémité de tuyau (2) ayant l'ouverture de tuyau à fermer, **caractérisé en ce que** la longueur de la portion de prolongement (5) est supérieure d'une valeur ΔL à la longueur de réception (9) d'une région d'enfichage (8) de diamètre intérieur élargi de chaque connecteur de tuyau (7) prévu pour la connexion du tuyau à d'autres éléments d'un système de canalisation, le diamètre extérieur (11) du bouchon de fermeture (1) dans sa portion de prolongement (5) étant inférieur au diamètre intérieur (10) de la région d'enfichage (8) d'un connecteur de tuyau respectif (7), mais étant supérieur au diamètre intérieur (12) d'une portion de connecteur de tuyau se raccordant à la région d'enfichage (8) du même connecteur de tuyau (7).

2. Bouchon de fermeture (1) selon la revendication 1, **caractérisé en ce que** sa portion de prolongement (5) est profilée sur sa surface extérieure (20) de telle sorte que dans le cas où le bouchon de fermeture (1) reste accidentellement sur le tuyau lors de l'enfichage de l'extrémité de tuyau (2) dans la région d'enfichage (8) d'un collecteur de tuyau (7), un défaut d'étanchéité produit du fait de la longueur de la portion de prolongement (5) dépassant de la longueur de réception (9) de la région d'enfichage (8) soit accentué.

3. Bouchon de fermeture (1) selon la revendication 2, **caractérisé en ce que** la portion de prolongement (5) présente sur sa périphérie extérieure une ou plusieurs rainures et/ou encoches (18) s'étendant depuis l'extrémité libre de la portion de prolongement (5) jusqu'à la butée (4).

4. Bouchon de fermeture (1) selon la revendication 2 ou 3, **caractérisé en ce que** la portion de prolongement (5) présente sur sa périphérie extérieure un ou plusieurs méplats (16) s'étendant depuis l'extrémité libre de la portion de prolongement (5) jusqu'à la butée (4).

5. Bouchon de fermeture (1) selon l'une quelconque des revendications 1 à 4, dans lequel la portion de fixation (3) et la portion de prolongement (5) du bouchon de fermeture (1) sont réalisées sous forme creuse et sont ouvertes au niveau de leurs extrémités libres opposées à la butée (4), **caractérisé en ce qu'**à l'intérieur de la butée (4) est disposée une membrane (17) s'étendant transversalement à l'étendue longitudinale du bouchon de fermeture, laquelle est conçue de telle sorte qu'elle éclate dans le cas d'une sollicitation avec une pression en dessous d'une pression de contrôle utilisée pour contrôler l'étanchéité des systèmes de canalisations montés.

6. Bouchon de fermeture (1) selon l'une quelconque des revendications 1 à 5, **caractérisé en ce que** la portion de prolongement présente au moins un orifice (19) s'étendant transversalement à son étendue longitudinale.

7. Bouchon de fermeture (1) selon l'une quelconque des revendications 1 à 6, **caractérisé en ce que** la surface extérieure (20) de la portion de prolongement (5) présente un ou plusieurs éléments d'engagement s'étendant sur une portion périphérique ou s'étendant sur le pourtour sur la périphérie de la portion de prolongement (5).
